# DEMANDE DE BREVET EUROPEEN

(11) **EP 1 978 613 A1**
(43) Date de publication de la demande: **08.10.2008**
(21) Numéro de dépôt: 08102722.9
(22) Date de dépôt: 18.03.2008
(51) Int. Cl.: H02B 5/00

(54) **Architecture d'un poste d'évacuation d'énergie d'une centrale de production d'électricité**

(30) Priorité: 02.04.2007 FR 0754220
(71) Demandeur: AREVA T&D SA, 92084 Paris La Défense Cedex (FR)
(72) Inventeur: Bessenay, Jacques, 69100, Villeurbanne (FR); Habert, Jean-Louis, 73410, Eppercy (FR)
(74) Mandataire: Poulin, Gérard

(57) **Abrégé**

L'invention concerne une nouvelle architecture de poste d'évacuation d'énergie d'une centrale de production d'électricité à au moins deux tranches.

Selon cette nouvelle architecture, une partie de l'alimentation de secours d'une deuxième tranche qui est constituée par trois phases du poste supplémentaires sous enveloppe métallique, est agencée de sorte que le support de chaque phase du poste supplémentaire en contact avec le sol recouvre une zone située à proximité de la plate-forme d'évacuation d'énergie d'une première tranche et non à l'aplomb des zones de cheminement des câbles à très haute tension enterrés reliés aux transformateurs de puissance et au transformateur de soutirage supportés par la plate-forme.

## Description

### DOMAINE TECHNIQUE ET ART ANTÉRIEUR

L'invention concerne le domaine de l'évacuation d'énergie produite par une centrale de production d'électricité.

Plus particulièrement, l'invention a trait à l'architecture d'un poste d'évacuation d'énergie produite par une tranche donnée d'une telle centrale.

### EXPOSÉ DE L'INVENTION

Traditionnellement, chaque centrale de production d'électricité comporte au moins deux tranches de production d'électricité, telles que des réacteurs nucléaires. A chaque tranche de production est associé un poste dit d'évacuation d'énergie permettant la transformation de l'électricité produite par la tranche en une électricité très haute tension, typiquement 400kV et la fourniture de l'électricité très haute tension à une ligne aérienne pour le transport de l'électricité ainsi produite.

Traditionnellement également, le poste est implanté immédiatement à proximité de la tranche, c'est-à-dire dans l'enceinte de celle-ci et les conducteurs de phase de la ligne aérienne sont tendus au dessus du poste.

Traditionnellement encore, le poste d'évacuation d'énergie ainsi dénommé comprend au moins un premier disjoncteur relié au transformateur élévateur de tension (dit aussi de puissance) de sortie de la tranche donnée, un deuxième disjoncteur en aval du premier disjoncteur et relié à la ligne arienne très haute tension, et un transformateur de soutirage relié à la ligne électrique entre les deux disjoncteurs et dont la fonction est d'alimenter électriquement tout ou partie des auxiliaires (pompes électriques, ....) de la même tranche donnée.

En cas de panne ou arrêt volontaire d'une autre tranche, il est impératif de continuer à alimenter électriquement tout ou partie de ses auxiliaires. C'est pourquoi il est classiquement prévu une alimentation dite de secours dont le principe est de prendre une partie de l'énergie électrique de très haute tension produite par la tranche donnée de la centrale en fonctionnement, de la transformer à la tension de fonctionnement des auxiliaires de l'autre tranche. Cette alimentation de secours comprend ainsi un disjoncteur de secours relié à la ligne très haute tension de la tranche donnée et à un transformateur abaisseur de tension lui-même relié à tout ou partie des auxiliaires de l'autre tranche.

Dans le domaine des centrales, il est convenu que le poste d'évacuation d'énergie ainsi dénommé, comprend la partie de l'alimentation de secours comprenant le disjoncteur de secours.

Récemment, la demanderesse a été sollicitée pour réaliser l'alimentation de secours d'une tranche supplémentaire d'une centrale existante. Le cahier des charges imposait initialement d'implanter physiquement le disjoncteur relié à la ligne à très haute tension à l'extérieur de l'enceinte de la centrale, d'utiliser une technologie de poste conventionnel, c'est-à-dire à isolement dans l'air, et de réaliser la liaison avec le transformateur abaisseur de tension de la tranche supplémentaire à l'aide de câbles enterrés sur une longue distance, typiquement de l'ordre de 650m.

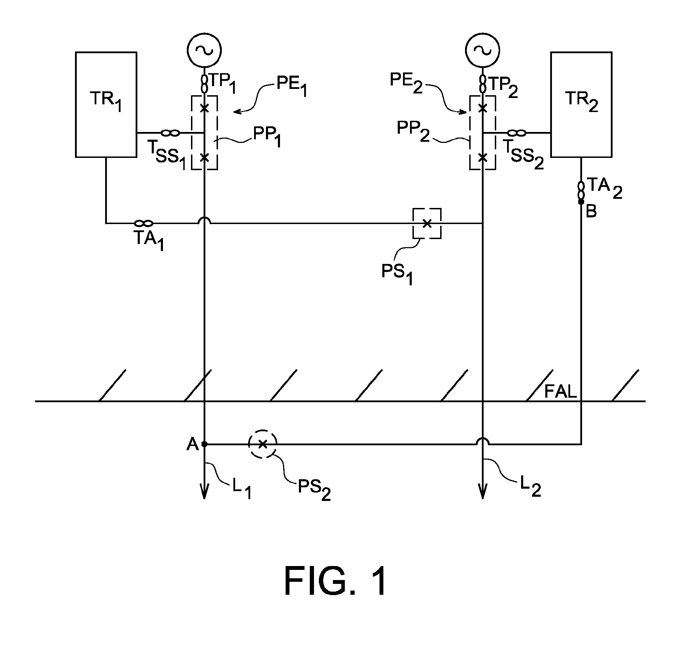

Sur la figure 1, on a représenté schématiquement l'installation électrique et l'implantation de l'alimentation de secours telle que demandée dans le cahier des charges initial.

Par souci de clarté, une ligne électrique n'est représentée que par un trait continu : il va de soi qu'en réalité la ligne est constituée de trois phases distinctes, donc trois conducteurs distincts.

Les croix représentent des disjoncteurs intégrés dans des postes.

Les rectangles en pointillés concernent des postes de type sous enveloppe métallique, le rond en pointillés concerne un poste de type conventionnel, c'est à-dire à isolement dans l'air.

La centrale électrique concernée comprend deux tranches de production d'électricité TRI, TR2 évacuant de l'électricité respectivement sur les lignes à très haute tension L1, L2. Pour évacuer l'électricité, chaque tranche TRI, TR2 comprend son propre poste d'évacuation d'énergie PE1, PE2.

Les postes d'évacuation d'énergie PE1, PE2 comprennent respectivement chacun un transformateur de puissance TP1, TP2, un transformateur de soutirage TSS1, TSS2, deux postes principaux PP1, PP2 du type sous enveloppe métallique.

Chaque transformateur de puissance TP1 est relié à l'alternateur de la première tranche TR1 et, par symétrie, chaque TP2 est relié à l'alternateur de la deuxième tranche TR2. Chaque transformateur de puissance TP1 est généralement constitué de trois unités monophasées.

Le transformateur de soutirage TSS1 est relié aux auxiliaires de la première tranche TRI, et, par symétrie, le transformateur de soutirage TSS2 est relié aux auxiliaires de la deuxième tranche TR2.

Chaque poste principal PP1 est relié aux transformateurs principaux TP1, au transformateur de soutirage TSS1 et à la ligne très haute tension L1, et par symétrie, le poste principal PP2 est relié aux transformateurs principaux TP2, au transformateur de soutirage TSS2 et à la ligne très haute tension L2.

En outre, le poste d'évacuation d'énergie PE2 comprend une partie de l'alimentation de secours de la première tranche TR1 constituée par un poste de secours PS1, de type sous enveloppe métallique, relié d'une part à la ligne très haute tension L2 et d'autre part à un transformateur auxiliaire TA1 constituant une autre partie de l'alimentation de secours de la première tranche TR1.

Le poste d'évacuation d'énergie PE1 comprend une partie de l'alimentation de secours de la deuxième tranche TR2 constituée par un poste de secours PS2 relié d'une part à la ligne très haute tension L1 et d'autre part à un transformateur auxiliaire TA2 constituant une autre partie de l'alimentation de secours de la deuxième tranche TR2.

Selon le cahier des charges initial, et tel que représenté, le poste de secours PS2 doit être de type conventionnel, c'est-à-dire à isolement dans l'air, et il doit être implanté sur une zone située au sommet d'une falaise FAL à l'extérieur de la centrale de production d'électricité.

La demanderesse a conclu à la très grande difficulté voire impossibilité technique et financière de réaliser concrètement une telle alimentation de secours de la deuxième tranche TR2 selon ce cahier des charges initial. En effet, la zone prévue pour implanter le poste conventionnel étant située au sommet d'une falaise surplombant la centrale, il serait nécessaire pour respecter une telle implantation de réaliser, au sommet, un ouvrage en génie civil de grandes dimensions et de prendre des mesures spécifiques pour le cheminement sur la falaise du câble à très haute tension reliant le poste conventionnel à la tranche supplémentaire. En outre, l'installation d'un tel câble nécessiterait également une surveillance constante de celui-ci pour éviter toute rupture ou perte d'isolement dont les conséquences sur la sécurité seraient néfastes...

Or, cela conduirait nécessairement à une solution coûteuse et complexe.

L'invention a donc pour objectif de proposer une solution plus simple et moins coûteuse d'implantation d'une alimentation de secours d'une tranche supplémentaire d'une centrale de production d'électricité existante.

A cet effet, l'invention prévoit une nouvelle architecture de poste d'évacuation d'énergie d'une centrale de production d'électricité à au moins deux tranches. Selon l'invention :
- une plate-forme d'évacuation d'énergie d'une première tranche qui supporte le transformateur de puissance, un transformateur de soutirage, les trois phases du poste d'évacuation de type sous enveloppe métallique, reliés au transformateur de soutirage et au transformateur de puissance, est accolée au bâtiment abritant l'alternateur d'une première tranche,
- trois pylônes d'ancrage, qui suspendent en l'air chacun un conducteur de phase d'une ligne aérienne à très haute tension relié à l'une des phases du poste sous enveloppe métallique, sont accolés à la plate-forme,
- une partie de l'alimentation de secours d'une deuxième tranche, reliée d'une part à la ligne à très haute tension et d'autre part à un transformateur auxiliaire, qui comprend les trois phases du poste supplémentaire sous enveloppe métallique, est agencée de sorte que le support de chaque phase du poste supplémentaire en contact avec le sol recouvre une zone située à proximité de la plate-forme d'évacuation d'énergie et non à l'aplomb des zones de cheminement des câbles à très haute tension enterrés reliés au transformateur de puissance et au transformateur de soutirage.

Dans le cadre de l'invention, il faut comprendre qu'un poste sous enveloppe métallique (PSEM)ou GIS(Gas Insulated Switchgear) comprend un bâti métallique à l'intérieur duquel se trouvent au moins un disjoncteur, au moins un sectionneur de mise à la terre (MALT), au moins un sectionneur de ligne et un compartiment de raccordement de câbles à très haute tension typiquement 400kV, et l'isolation du(es) disjoncteur(s), sectionneur(s) est réalisée à l'aide de gaz à grande rigidité diélectrique de type SF6.

De même dans le cadre de l'invention, il faut comprendre que l'expression « à proximité », signifie à l'intérieur du périmètre de la première tranche.

Ainsi, grâce à l'invention, l'implantation est plus simple à réaliser et moins coûteuse. En effet :
- la longueur de second câbles enterrés est fortement réduite, typiquement jusqu'à avoir une longueur de l'ordre de 150m,
- il n'y a pas nécessité de réaliser un ouvrage en génie civil de grandes dimensions.

Ainsi, grâce à l'architecture selon l'invention, le poste d'évacuation d'énergie est contenu dans le périmètre de la centrale existante et permet de minimiser l'impact des modifications.

Avantageusement, les trois phases du poste supplémentaire sont agencées parallèlement entre elles sur une plate-forme supplémentaire surélevée, l'espace de la plate-forme délimité entre deux phases du poste supplémentaire adjacent comprenant une trappe permettant le passage de chacun des deux phases du poste supplémentaire. En pouvant démonter ainsi facilement les phases du poste de leur support sans avoir besoin de lourds moyens de manutention, la rénovation et/ou le changement ultérieurs du poste est facilitée.

Selon cette variante avantageuse, la plate-forme supplémentaire est de préférence surélevée sensiblement à la même hauteur que la plate-forme d'évacuation d'énergie. L'accès à l'ensemble des postes sous enveloppe métallique est ainsi facilité pour la maintenance.

Il est avantageux de prévoir que les phases du poste supplémentaire soient agencées parallèlement avec deux d'entre elles intercalés individuellement dans l'espace délimité par deux pylônes d'ancrage adjacents. Un tel agencement permet de réduire encore l'encombrement de la partie de l'alimentation de secours implantée dans le périmètre de la première tranche.

L'invention concerne également une méthode d'implantation d'une partie d'alimentation de secours d'une tranche de centrale de production d'électricité selon laquelle on réalise les étapes suivantes :
a) réalisation de massifs pour supporter des postes sous enveloppe métallique dans une zone située à proximité de la plate-forme d'évacuation d'énergie d'une autre tranche de centrale et non à l'aplomb de zones de parcours de câbles à très haute tension enterrés,
b) assemblage de trois phases du poste supplémentaire sous enveloppe métallique et de leurs supports,
c) montage des supports sur les massifs puis du poste supplémentaire sous enveloppe métallique sur les supports,
d) raccordement du poste sous enveloppe métallique à la ligne à très haute tension de l'autre tranche de centrale par l'intermédiaire de conducteurs de dérivation, les étapes a) et b) étant réalisées pendant le fonctionnement de l'autre tranche, l'étape c) étant réalisée pendant un premier arrêt de l'autre tranche et l'étape d) étant réalisée pendant un deuxième arrêt de l'autre tranche ultérieur au premier arrêt.

### BRÈVE DESCRIPTION DES DESSINS

D'autres avantages et caractéristiques de l'invention ressortiront mieux à la lecture de la description détaillée d'un exemple de réalisation, à titre illustratif et non limitatif faite en référence aux figures ci-après.

La figure 1 représente, selon un cahier des charges connu, l'installation électrique et l'implantation des équipements d'une centrale de production d'électricité comprenant une tranche existante et à laquelle une tranche est rajoutée.

La figure 2A représente schématiquement et en perspective un mode de réalisation de l'architecture d'un poste à évacuation d'énergie selon l'invention.

La figure 2B représente schématiquement en vue de dessus l'architecture selon la figure 2A.

Les figures 3A à 3E représentent les différentes étapes d'implantation de la partie d'alimentation de secours d'une tranche de centrale de production d'électricité selon l'invention.

### EXPOSÉ DÉTAILLÉ D'UN MODE DE RÉALISATION PARTICULIER

La plate-forme d'évacuation d'énergie 1 existante d'une première tranche TR1 supporte tout d'abord un transformateur de puissance TP1 constitué de trois unités monophasées et relié à l'alternateur de la première tranche (non représenté).

Elle supporte également un transformateur de soutirage TSS1 relié aux auxiliaires de la première tranche TR1 (non représentés).

Elle supporte enfin les trois phases du poste 10,11,12 de type sous enveloppe métallique, reliés au transformateur de soutirage TSS1 et au transformateur de puissance TP1.

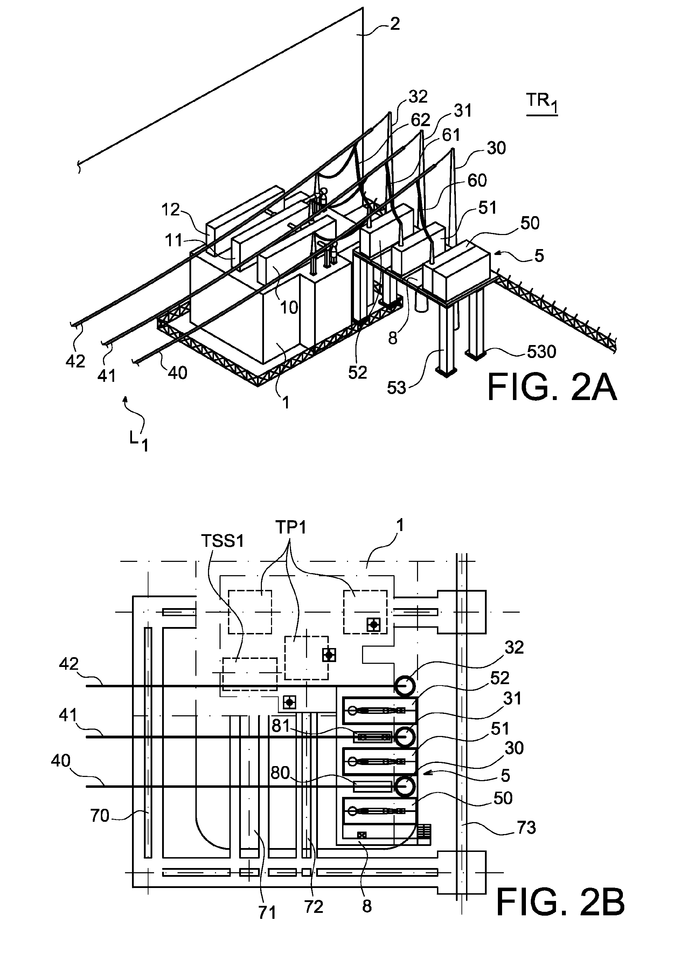

Dans l'architecture existante de la tranche TRI, les trois phases du poste sous enveloppe métallique 10,11,12 existants sont fixés sur le dessus de la plate-forme 1 et la plate-forme 1 est accolée au bâtiment 2 abritant l'alternateur de la première tranche TR1 (figure 2A).

Dans l'architecture existante de la tranche TRI, trois pylônes d'ancrages identiques 30,31,32, qui suspendent en l'air chacun un conducteur de phase 40,41,42 d'une ligne aérienne à très haute tension 4 relié individuellement à une des phases du poste sous enveloppe métallique 10,11,12, sont accolés à la plate-forme 1 (figures 2A et 2B).

Selon l'invention, une partie de l'alimentation de secours 5 d'une deuxième tranche TR2 comprend trois phases du poste supplémentaire sous enveloppe métallique 50,51,52 relié d'une part individuellement aux conducteurs 40,41,42 de phase suspendus par l'intermédiaire de conducteurs de dérivation aériens 60,61,62 et d'autre part à un transformateur auxiliaire TA2 d'une deuxième tranche TR2. (Figure 1).

Selon l'invention, cette partie de l'alimentation de secours 5 est agencée de sorte que le support 53 de chaque phase du poste supplémentaire 50,51,52 en contact avec le sol recouvre une zone située à proximité de la plate-forme d'évacuation d'énergie 1 et non à l'aplomb des zones de cheminement des câbles à très haute tension enterrés 70, 71, 72, 73 reliés aux transformateurs de puissance TP1 et au transformateur de soutirage TSS1. (Figure 2B).

Les trois phases du poste supplémentaire 50, 51, 52 sont accouplées entre elles par une liaison non rigide. Le fait de ne pas les accoupler par une liaison rigide, telle qu'une barre d'entraînement permet le cas échéant de localiser un poste supplémentaire 50, 51, 52 à distance d'un autre poste supplémentaire 50, 51, 52. Par exemple, dans la configuration où les zones de cheminement de câbles n'autoriseraient pas l'implantation d'un support commun aux trois phases d'un poste supplémentaire, il est intéressant de prévoir trois supports indépendants et à distance les uns des autres. Cette liaison non rigide peut consister en une liaison de type électromécanique, où des câbles électriques envoient simultanément de l'énergie électrique depuis un système d'entraînement commun vers une transmission mécanique de chacun des trois phases du poste 50, 51, 52.

Tel qu'illustré à la figure 2B, les phases du poste supplémentaire 50, 51, 52 sont agencées parallèlement entre elles sur une plate-forme supplémentaire 8 surélevée sensiblement à la même hauteur que la plate-forme 1. L'espace de la plate-forme 8 délimité entre deux phases du poste supplémentaire adjacents 50, 51, 51, 52 comprenant une trappe 80, 81 permettant le passage de chacun des deux phases du poste supplémentaire 50 ou 51 ; 51 ou 52.

Les phases du poste supplémentaire 50, 51, 52 sont agencées parallèlement avec deux d'entre elles 51, 52 intercalés individuellement dans l'espace délimité par deux pylônes d'ancrage adjacents 30-31 ; 31-32 (Figure 2B).

Pour réaliser l'implantation de la partie d'alimentation de secours 5 d'une tranche TR2 de centrale de production d'électricité, on procède de la manière suivante:

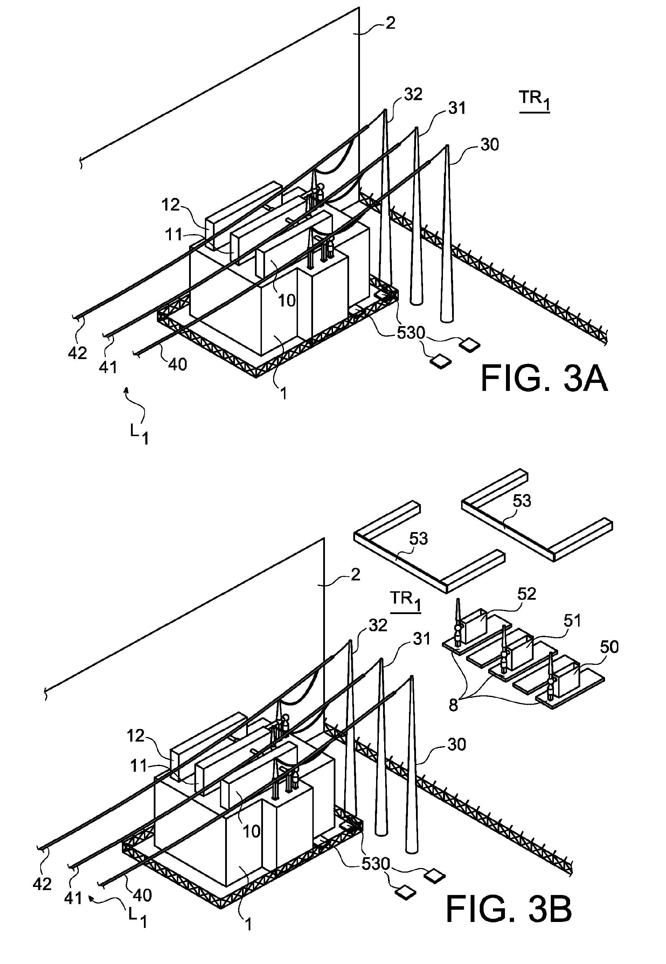

Tout d'abord, pendant le fonctionnement de la tranche TRI, on réalise des massifs 530 pour supporter les postes sous enveloppe métallique 50, 51, 52 dans une zone située à proximité de la plate-forme d'évacuation d'énergie 1 de la tranche TR1 de centrale, les massifs 530 n'étant pas à l'aplomb de zones de cheminement de câbles à très haute tension enterrés 70, 71, 72, 73 (figure 3A).

Toujours pendant le fonctionnement de la tranche TRI, on assemble ensuite les trois phases du poste supplémentaire sous enveloppe métallique 50, 51, 52 et leurs supports 53 (figure 3B).

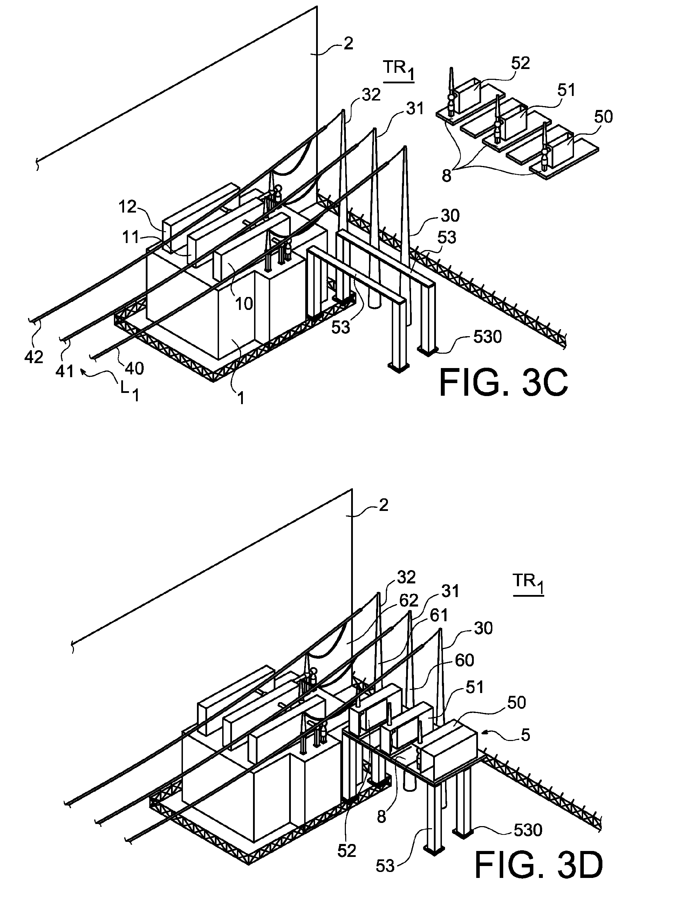

Ensuite, pendant un premier arrêt de la tranche TRI, on monte les supports 53 sur les massifs 530 puis les phases du poste supplémentaire sous enveloppe métallique 50, 51, 52 sur les supports 53 Plus exactement, l'assemblage des phases du poste supplémentaire est réalisé avant leur transport dans la centrale. Cet assemblage comprend la fixation des phases du poste 50, 51, 52 à plusieurs plateformes supplémentaires 8, 80, 81 et le montage des phases du poste 50, 51, 52, sur les supports 53 comprend la fixation des plateformes supplémentaires 8 sur les supports 53 (figures 3C et 3D).

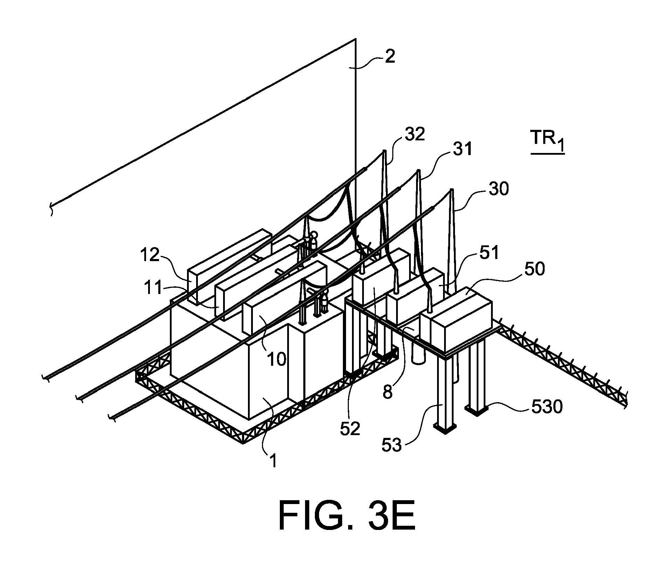

Enfin, pendant un deuxième arrêt de la tranche TR1 ultérieur au premier arrêt, on effectue le raccordement des phases du poste sous enveloppe métallique 50, 51, 52 à la ligne à très haute tension L1, 40, 41, 42 de la tranche TR1 par l'intermédiaire de conducteurs de dérivation 60, 61, 62. (Figure 3 E).

## Revendications

1. Architecture de poste d'évacuation d'énergie (PE1) d'une centrale de production d'électricité à au moins deux tranches (TR1, TR2), dans laquelle :
- une plate-forme d'évacuation d'énergie (1) d'une première tranche (TR1) qui supporte un transformateur de puissance (TP1), un transformateur de soutirage (TSS1), trois phases du poste de type sous enveloppe métallique (10, 11, 12), reliés au transformateur de soutirage (TSS1) et au transformateur de puissance (TP1), est accolée au bâtiment (2) abritant l'alternateur d'une première tranche (TR1),
- trois pylônes d'ancrage (30, 31, 32), qui suspendent en l'air chacun un conducteur de phase (40, 41, 42) d'une ligne aérienne à très haute tension (L1) relié à une phase du poste sous enveloppe métallique (10, 11, 12), sont accolés à la plate-forme (1),
- une partie (5) de l'alimentation de secours d'une deuxième tranche (TR2), reliée d'une part à la ligne à très haute tension (L1) et d'autre part à un transformateur auxiliaire TA2, qui comprend trois phases du poste supplémentaire (50, 51, 52) sous enveloppe métallique, est agencée de sorte que le support (53, 530) de chaque phase du poste supplémentaire en contact avec le sol recouvre une zone située à proximité de la plate-forme d'évacuation d'énergie (1) et non à l'aplomb des zones de cheminement des câbles à très haute tension enterrés (70, 71, 72, 73) reliés au transformateur de puissance (TP1) et au transformateur de soutirage (TSS1).

2. Architecture selon la revendication 1, dans laquelle les phases du poste supplémentaire (50, 51, 52) sont agencées parallèlement entre elles sur une plate-forme supplémentaire surélevée (8), l'espace de la plate-forme délimité entre deux phase du poste supplémentaire adjacents (50, 51 ; 51, 52) comprenant une trappe (80, 81) permettant le passage de chacune des deux phases du poste supplémentaire (50 ou 51 ; 51 ou 52).

3. Architecture selon la revendication 2, dans laquelle la plate-forme supplémentaire (8) est surélevée sensiblement à la même hauteur que la plate-forme d'évacuation d'énergie (1).

4. Architecture selon l'une des revendications précédentes, dans laquelle les phases du poste supplémentaire (50, 51, 52) sont agencées parallèlement avec deux d'entre elles (51, 52) intercalées individuellement dans l'espace délimité par deux pylônes d'ancrage adjacents (30-31 ; 31-32).

5. Méthode d'implantation d'une partie (5) d'alimentation de secours d'une tranche (TR2) de centrale de production d'électricité selon laquelle on réalise les étapes suivantes :
a) réalisation de massifs (530) pour supporter des postes sous enveloppe métallique (50, 51, 52) dans une zone située à proximité de la plate-forme d'évacuation d'énergie (1) d'une autre tranche (TR1) de centrale et non à l'aplomb de zones de cheminement des câbles à très haute tension enterrés (70, 71, 72, 73),
b) assemblage de trois phases du poste supplémentaire sous enveloppe métallique (50, 51, 52) et de leurs supports (53),
c) montage des supports (53) sur les massifs (530) puis des phases du poste supplémentaire (50, 51, 52) sous enveloppe métallique sur les supports (53),
d) raccordement des phases du poste sous enveloppe métallique (50,51,52) à la ligne à très haute tension (L1) de l'autre tranche (TR1) de centrale par l'intermédiaire de conducteurs de dérivation (60, 61, 62), les étapes a) et b) étant réalisées pendant le fonctionnement de l'autre tranche (TR1), l'étape c) étant réalisée pendant un premier arrêt de l'autre tranche (TR1) et l'étape d) étant réalisée pendant un deuxième arrêt de l'autre tranche (TR1) ultérieur au premier arrêt.

6. Méthode d'implantation selon la revendication 5, selon laquelle l'assemblage des phases du de poste supplémentaires (50, 51, 52) comprend la fixation des postes à une ou plusieurs plate-forme(s) supplémentaire(s) (8) et le montage des phases du poste sur les supports (53) comprend la fixation de la (des) plate-forme(s) supplémentaire(s) sur les supports.

7. Méthode d'implantation selon la revendication précédente, selon laquelle la fixation des postes à la ou les plate-forme(s) supplémentaire(s) se fait avant leur transport dans la centrale.
